# EUROPEAN PATENT APPLICATION

(11) **EP 4 810 569 A1**
(43) Date of publication of application: **23.09.2026**
(21) Application number: 24891140.6
(22) Date of filing: 15.10.2024
(51) Int. Cl.: C08L 77/00, C08J 5/04, C08K 3/013, C08K 7/04

(54) **POLYAMIDE COMPOSITION AND MOLDED ARTICLE**

(30) Priority: 14.11.2023 JP 2023193313
(71) Applicant: TOYOBO MC Corporation, Osaka-shi, Osaka 530-0001 (JP)
(72) Inventor: IWAMURA, Kazuki, Otsu-shi, Shiga 520-0292 (JP); TAMATSUSHIMA, Makoto, Otsu-shi, Shiga 520-0292 (JP)
(74) Representative: Vossius & Partner Patentanwälte Rechtsanwälte mbB
(86) International application number: PCT/JP2024/036649
(87) International publication number: WO 2025/105098

(57) **Abstract**

It is an object of the present invention to provide a polyamide composition capable of avoiding an excessive decrease in adhesion (that is, adhesion strength) between a molded article and an object (for example, a gap filler) on the molded article, which may occur when the molded article is exposed to a high-temperature environment for a long period of time. The polyamide composition contains a polyamide, a fibrous inorganic reinforcing material, and a thermally conductive inorganic filler. The ratio of the area of a peak at 1750 cm⁻¹ to 1700 cm⁻¹ to the area of a peak at 1665 cm⁻¹ to 1630 cm⁻¹ in an infrared absorption spectrum when being left to stand under a temperature environment of 150°C for 1000 hours is 0.10 or less. Here, the "infrared absorption spectrum" is an infrared absorption spectrum at a depth of 50 µm from the surface of a molded article when the molded article having an arithmetic average roughness (Ra) of 0.1 µm is molded using the polyamide composition, and the molded article is then left to stand under a temperature environment of 150°C for 1000 hours.

## Description

### TECHNICAL FIELD

The present invention relates to a polyamide composition and a molded article.

### BACKGROUND ART

Because of rapidly increasing the demand for a resin electronic device and a light emitting diode (LED), reducing the size of a part, and increasing the capacity and life of a battery of a battery-type electric vehicle (BEV), it is an important problem to efficiently exhaust heat generated in an electronic device.

As one of the solutions, a gap filler having high heat dissipation may be introduced between an electrical and electronic part (for example, a battery or a motor) that generates heat and a housing part. By filling air accumulation (that is, a space where air does not flow much) and gaps with the gap filler, the heat generated in the electrical and electronic part can be efficiently transferred to a peripheral part (for example, a battery peripheral part), and therefore the heat can be efficiently exhausted.

As the battery peripheral part (for example, a battery case or a base plate of a battery module), a resin molded article may be considered from the viewpoint of weight reduction, a production cycle, and a degree of freedom in shape, and the like. As the resin, engineering plastics, particularly a polyamide having high heat resistance is often considered.

Since the battery peripheral part is required to have a high thermal conductivity, it is common to blend a large amount of an inorganic substance having high heat dissipation (that is, an inorganic substance having a high thermal conductivity) in a polyamide. However, a polyamide composition containing a large amount of an inorganic substance may solidify while the inorganic substance is exposed on the surface during injection molding. This is called glass floating when the inorganic substance is glass, and is a kind of poor molding (see Patent Document 1 for the floating of the inorganic substance). When this type of poor molding occurs, the gap filler and the like are easily peeled off when a strong impact or shake is applied to a battery, so that a defect (for example, a defect such as a deviation between the battery and the battery peripheral part) caused by the peeling may occur. As a result, the air accumulation is generated between the battery and the battery peripheral part, thereby reducing heat dissipation, which may lead to the shorter life of the battery. There is a similar concern for the peripheral part of the electrical and electronic part other than the battery, for example, the peripheral part of the motor.

### PRIOR ART DOCUMENTS

### PATENT DOCUMENTS

Patent Document 1: JP-B-6518587
Patent Document 2: JP-B-6249565
Patent Document 3: JP-B-5993824

### SUMMARY OF THE INVENTION

### PROBLEMS TO BE SOLVED BY THE INVENTION

A molded article used as the peripheral part of an electrical and electronic part (for example, a battery or a motor) in a battery-type electric vehicle (BEV) tends to be exposed to a high-temperature environment for a long period of time. Therefore, the molded article used as the peripheral part of the electrical and electronic part is required to be capable of exhausting heat via a gap filler not only before being exposed to a high-temperature environment for a long period of time but also after being exposed to a high-temperature environment for a long period of time. As battery-type electric vehicles(BEVs) become more widespread and achieve higher performance, this requirement has become increasingly strong.

It is an object of the present invention to provide a polyamide composition capable of avoiding an excessive decrease in adhesion (that is, adhesion strength) between a molded article and an object (for example, a gap filler) on the molded article, which may occur when the molded article is exposed to a high-temperature environment for a long period of time. It is also an object of the present invention to provide a molded article capable of avoiding an excessive decrease in adhesion (that is, adhesion strength) between the molded article and an object (for example, a gap filler) on the molded article, which may occur when the molded article is exposed to a high-temperature environment for a long period of time.

### MEANS FOR SOLVING THE PROBLEMS

In order to solve this problem, the present invention has the configuration of [1] below.
[1] A polyamide composition containing: a polyamide; a fibrous inorganic reinforcing material; and a thermally conductive inorganic filler, wherein a ratio (hereinafter, may be referred to as a "peak area ratio") of an area of a peak (hereinafter, may be referred to as a "peak A") at 1750 cm⁻¹ to 1700 cm⁻¹ to an area of a peak (hereinafter, may be referred to as a "peak B") at 1665 cm⁻¹ to 1630 cm⁻¹ in an infrared absorption spectrum when being left to stand under a temperature environment of 150°C for 1000 hours is 0.10 or less, and a difference in arithmetic average roughness (Ra) between before and after being left to stand under a temperature environment of 150°C for 1000 hours is 1.5 µm or less as an absolute value.

Here, the "infrared absorption spectrum" is an infrared absorption spectrum at a depth of 50 µm from the surface of a molded article when the molded article having an arithmetic average roughness (Ra) of 0.1 µm is molded using the polyamide composition, and the molded article is then left to stand under a temperature environment of 150°C for 1000 hours.

The "difference in arithmetic average roughness (Ra)" is determined by a procedure in which a flat molded article having an arithmetic average roughness (Ra) of 0.1 µm is prepared using the polyamide composition, the flat molded article is then left to stand under a temperature environment of 150°C for 1000 hours, and the arithmetic average roughness (Ra) is then measured.

According to [1], the strength of the molded article, specifically, the bending strength of the molded article can be improved by the fibrous inorganic reinforcing material.

Moreover, the thermally conductive inorganic filler can improve the thermal conductivity of the molded article, that is, the heat dissipation of the molded article.

Furthermore, when the peak area ratio is 0.10 or less, it is possible to avoid an excessive decrease in adhesion between the molded article and an object (for example, a gap filler) on the molded article, which may occur when the molded article is exposed to a high-temperature environment for a long period of time. This is because it is possible to reduce the degree of the deterioration of the polyamide when the molded article is exposed to a high-temperature environment for a long period of time. This will be explained. The peak at 1750 cm⁻¹ to 1700 cm⁻¹ (that is, the peak A) is a peak that increases due to the deterioration of the polyamide. Meanwhile, the peak at 1665 cm⁻¹ to 1630 cm⁻¹ (that is, the peak B) is a peak derived from the carbonyl group of an amide bond. Therefore, in the infrared absorption spectrum when being left to stand under a temperature environment of 150°C for 1000 hours, the smaller the ratio of the area of the peak A to the area of the peak B (that is, peak A area/peak B area), the smaller the degree of the deterioration of the polyamide. According to [1], the ratio, that is, the peak area ratio is 0.10 or less, and therefore the degree of the deterioration of the polyamide on the surface or in the vicinity of the surface of the molded article when the molded article is exposed to a high-temperature environment for a long period of time can be reduced. Therefore, it is possible to reduce the detachment of the thermally conductive inorganic filler and the fibrous inorganic reinforcing material and the occurrence of cracks, which may occur when the molded article is exposed to a high-temperature environment for a long period of time. That is, the degree of the deterioration of the smoothness of the molded article when the molded article is exposed to a high-temperature environment for a long period of time can be reduced. As a result, it is possible to avoid an excessive decrease in adhesion between the molded article and an object (for example, a gap filler) on the molded article, which may occur when the molded article is exposed to a high-temperature environment for a long period of time.

Furthermore, the difference in arithmetic average roughness (Ra) is 1.5 µm or less as an absolute value, that is, the difference between the arithmetic average roughness (Ra) after being left to stand under a temperature environment of 150°C for 1000 hours and the arithmetic average roughness (Ra) before being left to stand (specifically, before being left to stand under a temperature environment of 150°C for 1000 hours) is 1.5 µm or less, and therefore it is possible to further avoid an excessive decrease in adhesion between the molded article and an object (for example, a gap filler) on the molded article, which may occur when the molded article is exposed to a high-temperature environment for a long period of time.

In the present invention, the following configurations of [2] to [13] are preferable.

[2]
The polyamide composition according to [1], wherein the polyamide composition has a bending strength of 120 MPa or more and a thermal conductivity of 0.60 W/m·K or more.

Here, the bending strength is a value measured after a test piece is prepared using the polyamide composition. The thermal conductivity is a value measured after a disk-shaped sample is prepared using the polyamide composition.

According to [2], when the molded article is used as a peripheral part of an electrical and electronic part (for example, a battery or a motor), the molded article can have suitable mechanical properties and a suitable thermal conductivity.

[3]
The polyamide composition according to [1] or [2], wherein the difference is 1.0 µm or less as the absolute value.

According to [3], it is possible to further avoid an excessive decrease in adhesion between the molded article and an object (for example, a gap filler) on the molded article, which may occur when the molded article is exposed to a high-temperature environment for a long period of time.

[4]
The polyamide composition according to any one of [1] to [3], further containing an antioxidant and a stabilizer.

[5]
The polyamide composition according to any one of [1] to [4], wherein the polyamide contains a crystalline polyamide.

According to [5], the mechanical properties of the polyamide composition can be improved.

[6]
The polyamide composition according to any one of [1] to [5], wherein the polyamide has a relative viscosity of 2.0 or more and 3.6 or less.

Here, the relative viscosity is a value measured at 25°C and a sample (that is, polyamide) of 1 g/dL using 98% sulfuric acid in conformity with JIS K6920-2: 2009.

According to [6], when the polyamide composition is melted and fluidized for injection molding, the polyamide composition can exhibit favorable fluidity for injection molding.

[7]
The polyamide composition according to any one of [1] to [6], wherein a content of the thermally conductive inorganic filler is 35% by mass or more.

According to [7], the thermal conductivity of the molded article, that is, the heat dissipation of the molded article can be further improved.

[8]
The polyamide composition according to any one of [1] to [7], wherein the thermally conductive inorganic filler is surface-treated.

With respect to [8], the thermally conductive inorganic filler can be surface-treated with, for example, a compound which easily reacts with a carboxylic acid group and/or a carboxylic acid anhydride group. When the thermally conductive inorganic filler is surface-treated with the compound which easily reacts with a carboxylic acid group and/or a carboxylic acid anhydride group, mechanical properties and a thermal conductivity can be equally (that is, without unevenness) expressed in the polyamide composition or the molded article, and the degree of the deterioration of the smoothness of the molded article when the molded article is exposed to a high-temperature environment for a long period of time can be further reduced. This will be explained. When the thermally conductive inorganic filler is surface-treated with the compound which easily reacts with a carboxylic acid group and/or a carboxylic acid anhydride group, the affinity of the thermally conductive inorganic filler for polyamides can be improved, and therefore the dispersibility and adhesion of the thermally conductive inorganic filler can be improved. The improvement of the dispersibility contributes to the equal expression of mechanical properties and a thermal conductivity (that is, without unevenness) in the polyamide composition or the molded article. Meanwhile, since the improvement of the adhesion contributes to the interfacial strength between the thermally conductive inorganic filler and the polyamide, it is possible to reduce the detachment of the thermally conductive inorganic filler which may occur when the molded article is exposed to a high-temperature environment for a long period of time, and therefore it is possible to further reduce the degree of the deterioration of the smoothness of the molded article when the molded article is exposed to a high-temperature environment for a long period of time.

[9]
The polyamide composition according to any one of [1] to [8], wherein the polyamide composition is used as a raw material for a molded article to which a gap filler is to be provided.

[10]
The polyamide composition according to any one of [1] to [9], further containing a phenolic antioxidant and a copper compound.

According to [10], it is possible to effectively reduce the degree of the deterioration of the polyamide on the surface or in the vicinity of the surface of the molded article when the molded article is exposed to a high-temperature environment for a long period of time, and therefore it is possible to further avoid an excessive decrease in adhesion between the molded article and an object (for example, a gap filler) on the molded article, which may occur when the molded article is exposed to a high-temperature environment for a long period of time. This will be explained. When the molded article is exposed to a high-temperature environment for a long period of time, radicals may be generated at a speed exceeding the radical scavenging rate of the phenolic antioxidant. That is, a radical generation amount per unit time may exceed a radical scavenging amount per unit time of the phenolic antioxidant. By using the copper compound together with the phenol antioxidant, the polyamide can be stabilized and therefore the oxidative degradation of the polyamide due to radicals not captured by the phenol antioxidant can be reduced. Therefore, it is possible to effectively reduce the degree of the deterioration of the polyamide on the surface or in the vicinity of the surface of the molded article when the molded article is exposed to a high-temperature environment for a long period of time, and therefore it is possible to further reduce the degree of the deterioration of the smoothness of the molded article. As a result, it is possible to further avoid an excessive decrease in adhesion between the molded article and an object (for example, a gap filler) on the molded article, which may occur when the molded article is exposed to a high-temperature environment for a long period of time.

[11]
The polyamide composition according to [10], wherein the phenolic antioxidant has a hindered structure, and the copper compound is at least one selected from the group consisting of copper acetate, copper iodide, and copper bromide.

According to [11], when the phenolic antioxidant has the hindered structure, it is possible to avoid an excessively high reaction rate with the radicals that cause the oxidative degradation of the surface of the molded article, and therefore the phenolic antioxidant can exert an action of preventing oxidative degradation for a long period of time. When the copper compound is at least one selected from the group consisting of copper acetate, copper iodide, and copper bromide, the polyamide can be further stabilized, and therefore the oxidative degradation of the polyamide due to the radicals not captured by the phenol antioxidant can be further reduced.

[12]
The polyamide composition according to any one of [1] to [11], further containing a mold release agent.

According to [12], when the polyamide composition is molded in a die (for example, injection molding), the molded article can be easily taken out from the die. Therefore, even when the molded article has a complicated shape, the molded article can be easily taken out from the die.

[13]
A molded article obtained by molding the polyamide composition according to any one of [1] to [12].

In order to solve the above problems, the present invention may have the configuration of [14] below. [14]
A polyamide composition containing a polyamide, a fibrous inorganic reinforcing material, a thermally conductive inorganic filler, a phenolic antioxidant, and a copper compound.

According to [14], the strength of a molded article, specifically, the bending strength of the molded article can be improved by the fibrous inorganic reinforcing material.

Moreover, the thermally conductive inorganic filler can improve the thermal conductivity of the molded article, that is, the heat dissipation of the molded article.

Furthermore, the phenolic antioxidant and the copper compound make it possible to avoid an excessive decrease in adhesion between the molded article and an object (for example, a gap filler) on the molded article, which may occur when the molded article is exposed to a high-temperature environment for a long period of time. This will be explained. As described above, by using the copper compound, the polyamide can be stabilized, and therefore the oxidative degradation of the polyamide due to the radicals not captured by the phenol antioxidant can be reduced. Therefore, it is possible to effectively reduce the degree of the deterioration of the polyamide on the surface or in the vicinity of the surface of the molded article when the molded article is exposed to a high-temperature environment for a long period of time, and therefore it is possible to reduce the degree of the deterioration of the smoothness of the molded article. As a result, it is possible to avoid an excessive decrease in adhesion between the molded article and an object (for example, a gap filler) on the molded article, which may occur when the molded article is exposed to a high-temperature environment for a long period of time.

In the present invention, the following configuration of [15] is preferable.

A molded article obtained by molding the polyamide composition according to [14].

### EFFECT OF THE INVENTION

It is possible to provide a polyamide composition capable of avoiding an excessive decrease in adhesion (that is, adhesion strength) between a molded article and an object (for example, a gap filler) on the molded article, which may occur when the molded article is exposed to a high-temperature environment for a long period of time. It is also possible to provide a molded article capable of avoiding an excessive decrease in adhesion (that is, adhesion strength) between the molded article and an object (for example, a gap filler) on the molded article, which may occur when the molded article is exposed to a high-temperature environment for a long period of time.

### BRIEF DESCRIPTION OF THE DRAWINGS

Fig. 1 is a photograph taken when a flat molded article molded in Example 1 is treated at 150°C for 1000 hours, and the surface of the flat molded article is then observed with a microscope.
Fig. 2 is a photograph taken when a flat molded article molded in Comparative Example 2 is treated at 150°C for 1000 hours, and the surface of the flat molded article is then observed with a microscope.

### MODE FOR CARRYING OUT THE INVENTION

Hereinafter, embodiments of the present invention will be described in detail.

### <1. Polyamide composition>

### <1.1. Polyamide>

A polyamide composition of the present embodiment contains a polyamide. The polyamide is a polymer that has an amide bond (-NHCO-) in the main chain.

As the polyamide, a crystalline polyamide is preferable. When the polyamide contains the crystalline polyamide, the mechanical properties of the polyamide composition can be improved. In addition, the mechanical properties of a molded article when the molded article is exposed to a high-temperature environment for a long period of time can also be improved. Examples of the crystalline polyamide include polyamide 6 (PA6), polyamide 66 (PA66), polyamide 46 (PA46), polyamide 56 (PA56), polyamide 11 (PA11), polyamide 12 (PA12), polyamide 510 (PA510), polyamide 610 (PA610), polyamide 612 (PA612), polymetaxylylene adipamide (PAMXD6), hexamethylenediamine-terephthalic acid polymer (PA6T), hexamethylenediamine-terephthalic acid and adipic acid polymer (PA6T/66), a copolymer of hexamethylenediamine-terephthalic acid with ε-caprolactam (PA6T/6), trimethylhexamethylenediamine-terephthalic acid polymer (PATMD-T), a copolymer of metaxylylenediamine with adipic acid and isophthalic acid (PAMXD6/MXDI), a copolymer of trihexamethylenediamine with terephthalic acid and ε-caprolactam (PATMDT/6), and a copolymer of diaminodicyclohexylenemethane with isophthalic acid and lauryllactam. These may be used singly or two or more kinds thereof may be used. In the case of the crystalline polyamide, a polyamide obtained by polymerization from a plant-derived raw material may be used. Among these, polyamide 6 is preferable because of its excellent moldability, melt flowability, and mechanical properties.

Polyamide 6 is preferably a polyamide of which the main raw material is ε-caprolactam. A polyamide of which the main raw material is ε-caprolactam can be obtained by polycondensation. Polyamide 6 may be copolymerized with another monomer. Examples of such a monomer include amino acids such as 11-aminoundecanoic acid, 12-aminododecanoic acid, and para-aminomethylbenzoic acid, lactams such as ω-laurolactam; aliphatic diamines such as tetramethylenediamine, pentamethylenediamine, hexamethylenediamine, 2-methylpentamethylenediamine, undecamethylenediamine, dodecamethylenediamine, 2,2,4-/2,4,4-trimethylhexamethylenediamine, and 5-methylnonamethylenediamine; aromatic diamines such as metaxylylenediamine and paraxylylenediamine; alicyclic diamines such as 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, and aminoethylpiperazine; aliphatic dicarboxylic acids such as adipic acid, suberic acid, azelaic acid, sebacic acid, and dodecanedioic acid; aromatic dicarboxylic acids such as terephthalic acid, isophthalic acid, 2-chloroterephthalic acid, 2-methylterephthalic acid, 5-methylisophthalic acid, 5-sulfoisophthalic acid sodium salt, hexahydroterephthalic acid, and hexahydroisophthalic acid; and alicyclic dicarboxylic acids such as 1,4-cyclohexanedicarboxylic acid, 1,3-cyclohexanedicarboxylic acid, 1,2-cyclohexanedicarboxylic acid, and 1,3-cyclopentanedicarboxylic acid. Two or more kinds of these may be copolymerized.

In 100 mol% of the sum of monomer units constituting polyamide 6, the unit derived from ε-caprolactam is preferably 60 mol% or more, more preferably 70 mol% or more, still more preferably 80 mol% or more, still more preferably 90 mol% or more. This may be 100 mol%.

The relative viscosity of the crystalline polyamide is preferably 1.5 or more, more preferably 1.8 or more, and still more preferably 2.0 or more. When the relative viscosity is 1.5 or more, an excessive increase in fluidity when the polyamide composition is melted and allowed to flow can be suppressed. For example, when the polyamide composition is melted and allowed to flow for injection molding, it can be avoided that the polyamide composition exhibits excessively high fluidity for injection molding. In addition, the strength can be further improved. The relative viscosity of the crystalline polyamide is preferably 4.5 or less, more preferably 4.0 or less, and still more preferably 3.6 or less. When the relative viscosity is 4.5 or less, an excessive decrease in fluidity when the polyamide composition is melted and allowed to flow can be suppressed. For example, when the polyamide composition is melted and allowed to flow for injection molding, it can be avoided that the polyamide composition exhibits excessively low fluidity for injection molding. In addition, the dispersibility of the thermally conductive inorganic filler can be enhanced. The relative viscosity is a value measured at 25°C and a sample (that is, polyamide) of 1 g/dL using 98% sulfuric acid in conformity with JIS K6920-2: 2009.

In 100% by mass of polyamide contained in the polyamide composition of the present embodiment, the content of the crystalline polyamide is preferably 80% by mass or more. The content of the crystalline polyamide may be 90% by mass or more, 95% by mass or more, 98% by mass or more, or 100% by mass.

The polyamide composition of the present embodiment may contain an amorphous polyamide. When the polyamide composition contains an amorphous polyamide, transfer to a molded article (that is, mold transfer) becomes easy in a case where injection molding is performed using the polyamide composition. The amorphous polyamide may be a polyamide of which the crystal melting peak is not observed in a thermogram measured by differential scanning calorimetry (DSC). Examples of the amorphous polyamide include polymers obtained by the polycondensation of diamines such as 4,4'-diamino-3,3'-dimethyldicyclohexylmethane (CA), 4,4'-diaminodicyclohexylmethane (PACM), meta-xylylenediamine (MXD), trimethylhexamethylenediamine (TMD), isophoronediamine (IA), 4,4'-diaminodicyclohexylpropane (PACP), and hexamethylenediamine with dicarboxylic acids such as terephthalic acid, isophthalic acid, adipic acid, sebacic acid, and dodecanedicarboxylic acid and, if necessary, lactams such as caprolactam and lauryl lactam. These may be used singly or two or more kinds thereof may be used. Of course, the amorphous polyamide may be copolymerized with another monomer.

In particular, it is preferred that the amorphous polyamide contains an aromatic component from the viewpoint that crystallization is likely to be suppressed. As the amorphous polyamide containing an aromatic component, polyamide 6T/6I of which the raw material is terephthalic acid, isophthalic acid, and adipic acid, and polyamide 6T/66 of which the raw material is terephthalic acid, adipic acid, and hexamethylenediamine are preferred. Among these, polyamide 6T/6I is more preferred from the viewpoint of moldability.

In the polyamide composition of the present embodiment, the content of the polyamide is preferably 25% by mass or more, more preferably 30% by mass or more, still more preferably 38% by mass or more. The content of the polyamide is preferably 50% by mass or less, more preferably 45% by mass or less, still more preferably 42% by mass or less.

### <1.2. Fibrous inorganic reinforcing material>

The polyamide composition of the present embodiment contains a fibrous inorganic reinforcing material. The strength, specifically, bending strength, can be improved by a fibrous inorganic reinforcing material. In addition to this, the rigidity, heat resistance and the like can be improved.

Examples of the fibrous inorganic reinforcing material include a glass fiber, a carbon fiber, an aramid fiber, an alumina fiber, a silicon carbide fiber, and a zirconia fiber. Examples of the fibrous inorganic reinforcing material include whiskers such as aluminum borate and potassium titanate, acicular wollastonite, and a milled fiber. Among these, a glass fiber and a carbon fiber are preferred. These may be used singly or two or more kinds thereof may be used.

Examples of the glass fiber include a glass fiber in the form of chopped strands. The fiber length of the glass fiber is preferably 1 mm to 20 mm. The cross-sectional shape of the glass fiber may be circular or noncircular. Here, the "cross-sectional shape" refers to the shape of a cross section perpendicular to the longitudinal direction of the glass fiber. Examples of the noncircular cross section include a substantially elliptical cross section, a substantially oval cross section, and a substantially cocoon-shaped cross section. The flatness of the glass fiber having a noncircular cross section is preferably 1.5 to 8. Here, the flatness is the ratio of the major axis to the minor axis (that is, major axis/minor axis) when a rectangle with the minimum area circumscribing a cross section perpendicular to the longitudinal direction of the glass fiber is assumed and then the length of the long side of the rectangle is denoted as the major axis and the length of the short side is denoted as the minor axis. The minor axis of the glass fiber is preferably 1 µm to 20 µm. The major axis of the glass fiber is preferably 2 µm to 100 µm.

For the fibrous inorganic reinforcing material, the ratio of the average fiber length to the average fiber diameter is preferably 100 or more, more preferably 200 or more. This ratio is preferably 1000 or less, more preferably 800 or less. This ratio may be 500 or less.

The fibrous inorganic reinforcing material is preferably treated with a coupling agent. This can improve the affinity for polyamides and improve the mechanical properties. This can also improve appearance properties. Examples of the coupling agent include organic silane-based compounds, organic titanium-based compounds, organic borane-based compounds, and epoxy-based compounds. The coupling agent is preferably a coupling agent which easily reacts with a carboxylic acid group and/or a carboxylic anhydride group. When the fibrous inorganic reinforcing material is surface-treated with the compound which easily reacts with a carboxylic acid group and/or a carboxylic acid anhydride group, mechanical properties can be equally (that is, without unevenness) expressed in the polyamide composition or the molded article, and the degree of the deterioration of the smoothness of the molded article when the molded article is exposed to a high-temperature environment for a long period of time can be further reduced. This will be explained. When the fibrous inorganic reinforcing material is surface-treated with the compound which easily reacts with a carboxylic acid group and/or a carboxylic acid anhydride group, the affinity of the fibrous inorganic reinforcing material for polyamides can be improved, and therefore the dispersibility and adhesion of the fibrous inorganic reinforcing material can be improved. The improvement of the dispersibility contributes to the equal expression of mechanical properties (that is, without unevenness) in the polyamide composition or the molded article. Meanwhile, since the improvement of the adhesion contributes to the interfacial strength between the fibrous inorganic reinforcing material and the polyamide, it is possible to reduce the detachment of the fibrous inorganic reinforcing material which may occur when the molded article is exposed to a high-temperature environment for a long period of time, and therefore it is possible to further reduce the degree of the deterioration of the smoothness of the molded article when the molded article is exposed to a high-temperature environment for a long period of time. Examples of the coupling agent from a slightly different perspective include silane-based coupling agents, titanate-based coupling agents, and aluminum-based coupling agents. Among these, silane-based coupling agents such as aminosilane coupling agents and epoxysilane coupling agents are preferable. It is preferable to carry out the treatment with a coupling agent in advance, but the coupling agent may be added later.

In the polyamide composition of the present embodiment, the content of the fibrous inorganic reinforcing material is preferably 5% by mass or more, more preferably 10% by mass or more, still more preferably 15% by mass or more. When the content is 5% by mass or more, the bending strength, that is, the strength, can be further improved. Meanwhile, the content of the fibrous inorganic reinforcing material is preferably 50% by mass or less, more preferably 40% by mass or less, still more preferably 30% by mass or less. When the content is 50% by mass or less, it is possible to avoid difficulties in production of a molded article using the polyamide composition.

### <1.3. Thermally conductive inorganic filler>

The polyamide composition of the present embodiment contains a thermally conductive inorganic filler. The thermally conductive inorganic filler can increase the thermal conductivity of the molded article, and therefore the heat dissipation of the molded article can be improved. The "thermally conductive inorganic filler" can mean a filler containing an inorganic compound and having a thermal conductivity of 1 W/m·K or more.

Examples of the inorganic compound contained in the thermally conductive inorganic filler include boron nitride, alumina, silica, aluminum hydroxide, magnesium oxide, and aluminum nitride. These may be used singly or two or more of these may be used. The thermally conductive inorganic filler preferably has an insulating property.

Examples of the thermally conductive inorganic filler containing magnesium oxide include a sintered body (that is, a sintered body containing magnesium oxide) and light sintered magnesia. Among these, a sintered body is preferable. Here, the "sintered body", specifically, the "sintered body containing magnesium oxide" is a granular sintered body in which some particles containing magnesium oxide are bonded together. The sintered body may further contain silicon oxide (SiO₂) and calcium oxide (CaO). The sintered body may contain magnesium oxide, silicon oxide (SiO₂), calcium oxide (CaO), as well as compounds obtained by the reaction of these. The sintered body may contain, for example, B₂O₃, Al₂O₃, Fe₂O₃, and Na₂SO₄ and the like.

The content of magnesium oxide in the sintered body is preferably 85.0% by mass or more, more preferably 88.0% by mass or more, still more preferably 90.0% by mass or more, yet still more preferably 92.0% by mass or more, and further preferably 94.0%% by mass or more in 100% by mass of the sintered body. When the content is 85.0% by mass or more, the thermal conductivity of the sintered body is excellent. Meanwhile, the content of magnesium oxide may be, for example, 99.7% by mass or less in 100% by mass of the sintered body.

The particle diameter of the thermally conductive inorganic filler, specifically, the median diameter is preferably 1 µm or more, more preferably 2 µm or more, still more preferably 5 µm or more, and yet still more preferably 10 µm or more. When the particle diameter is 1 µm or more, an excessive decrease in fluidity when the polyamide composition is melted and allowed to flow can be suppressed. The median diameter may be 30 µm or more, or 60 µm or more. Meanwhile, the median diameter is preferably 200 µm or less, more preferably 150 µm or less, still more preferably 100 µm or less. When the median diameter is 200 µm or less, the thermal conductivity can be further improved. The median diameter may be 80 µm or less. Here, the median diameter is D50 and specifically is the particle diameter at cumulative 50% in the cumulative particle size distribution on the volume basis in the thermally conductive inorganic filler.

Examples of the shape (that is, the particle shape) of the thermally conductive inorganic filler include a flat plate shape, a needle shape, a spherical shape, a fiber shape, and an irregular shape. Among these, a spherical shape and an irregular shape are preferable. The spherical shape can impart uniform heat dissipation to the molded article without being biased in any of the flow direction, vertical direction, and thickness direction of the molded article.

The thermally conductive inorganic filler is preferably surface-treated, and more preferably surface-treated with a coupling agent. Examples of the coupling agent include organic silane-based compounds, organic titanium-based compounds, organic borane-based compounds, and epoxy-based compounds. The coupling agent is preferably a coupling agent which easily reacts with a carboxylic acid group and/or a carboxylic anhydride group. When the thermally conductive inorganic filler is surface-treated with the compound which easily reacts with a carboxylic acid group and/or a carboxylic acid anhydride group, mechanical properties and a thermal conductivity can be equally (that is, without unevenness) expressed in the polyamide composition or the molded article, and the degree of the deterioration of the smoothness of the molded article when the molded article is exposed to a high-temperature environment for a long period of time can be further reduced. This will be explained. When the thermally conductive inorganic filler is surface-treated with the compound which easily reacts with a carboxylic acid group and/or a carboxylic acid anhydride group, the affinity of the thermally conductive inorganic filler for polyamides can be improved, and therefore the dispersibility and adhesion of the thermally conductive inorganic filler can be improved. The improvement of the dispersibility contributes to the equal expression of mechanical properties and a thermal conductivity (that is, without unevenness) in the polyamide composition or the molded article. Meanwhile, since the improvement of the adhesion contributes to the interfacial strength between the thermally conductive inorganic filler and the polyamide, it is possible to reduce the detachment of the thermally conductive inorganic filler which may occur when the molded article is exposed to a high-temperature environment for a long period of time, and therefore it is possible to further reduce the degree of the deterioration of the smoothness of the molded article when the molded article is exposed to a high-temperature environment for a long period of time. It can be also expected to reduce the degree of the deterioration of the thermal conductivity of the molded article, which may occur when the molded article is exposed to a high-temperature environment for a long period of time. Examples of the coupling agent from a slightly different perspective include silane-based coupling agents, titanate-based coupling agents, and aluminum-based coupling agents. Among these, silane-based coupling agents such as aminosilane coupling agents and epoxysilane coupling agents are preferable. It is preferable to carry out the treatment with a coupling agent in advance, but the coupling agent may be added later.

In the polyamide composition of the present embodiment, the content of the thermally conductive inorganic filler is preferably 20% by mass or more, more preferably 25% by mass or more, still more preferably 30% by mass or more, and yet still more preferably 35% by mass or more. When the content is 20% by mass or more, the heat dissipation can be further improved. The content of the thermally conductive inorganic filler may be 40% by mass or more, or may be 45% by mass or more. Meanwhile, the content of the thermally conductive inorganic filler is preferably 60% by mass or less, more preferably 55% by mass or less, and still more preferably 50% by mass or less. When the content is 60% by mass or less, an excessive decrease in fluidity when the polyamide composition is melted and allowed to flow can be suppressed.

### <1.4. Antioxidant and stabilizer>

The polyamide composition of the present embodiment preferably contains an antioxidant and/or a stabilizer, and more preferably contains both the antioxidant and the stabilizer. The oxidation degradation of the polyamide can be suppressed by the antioxidant and/or the stabilizer.

Examples of the antioxidant or the stabilizer include a phenolic antioxidant, a copper compound, an alkali metal halide, a hindered amine stabilizer (HALS), an organic phosphorus stabilizer, an amine antioxidant, a sulfur antioxidant, fine elemental iron, a fine dispersed metal powder, and a metal cyanide salt. Among these, a phenolic antioxidant is preferable as the antioxidant. As the stabilizer, a copper compound and an alkali metal halide are preferable. These may be used singly or two or more kinds thereof may be used.

As the phenolic antioxidant, a hindered phenolic antioxidant, that is, a phenolic antioxidant having a hindered structure is preferable. When the phenolic antioxidant has the hindered structure, it is possible to avoid an excessively high reaction rate with the radicals that cause the oxidative degradation of the surface of the molded article, and therefore the phenolic antioxidant can exert an action of preventing oxidative degradation for a long period of time. The hindered structure may be a structure in which at least one of two carbon atoms at the ortho positions of a carbon atom having a hydroxyl group among carbon atoms constituting a benzene ring contained in an aromatic hydrocarbon has a bulky substituent. As an example of the bulky substituent, a tert-butyl group can be mentioned. Examples of the hindered phenolic antioxidant include N,N'-hexamethylene-bis-3-(3,5-di-tert-butyl-4-hydroxyphenyl)propionamide, bis(3,3-bis-(4'-hydroxy-3'-tert-butylphenyl)butanoic acid)glycol ester, 2,1'-thioethylbis(3-(3,5-di-tert-butyl-4-hydroxyphenyl)propionate), 4,4'-butylidene-bis(3-methyl-6-tert-butylphenol), and triethylene glycol-3-(3-tert-butyl-4-hydroxy-5-methylphenyl)propionate ("SONGNOX 2450", molecular weight: 633). These may be used singly or two or more kinds thereof may be used.

In the polyamide composition of the present embodiment, the content of the phenolic antioxidant is preferably 0.05% by mass or more, more preferably 0.1% by mass or more, and still more preferably 0.15% by mass or more. When the content is 0.05% by mass or more, the oxidation degradation of the polyamide composition can be further suppressed. Meanwhile, the content of the phenolic antioxidant is preferably 1.0% by mass or less, and more preferably 0.5% by mass or less. The content of the phenolic antioxidant may be 0.4% by mass or less, 0.3% by mass or less, or 0.25% by mass or less.

The copper compound has an action of preventing the oxidation degradation of the polyamide. This is believed to be because the copper ion of the copper compound is coordinated to the amide group, thereby forming a chelate, resulting in the stabilization of the polyamide.

Examples of the copper compound include fatty acid copper and copper halide. Examples of the copper halide include copper chloride, copper bromide, copper iodide, and copper fluoride. Examples of the fatty acid copper include copper acetate, copper laurate, and copper stearate. Among these, copper bromide, copper iodide, and copper acetate are preferable, and copper bromide is more preferable. The copper bromide is preferably cupric bromide. These may be used singly or two or more kinds thereof may be used.

The content of the copper compound is preferably 0.001 parts by mass or more, and more preferably 0.005 parts by mass or more, based on copper (that is, in terms of copper element) with respect to 100 parts by mass of the polyamide resin. When the content is 0.001
parts by mass or more, the oxidation degradation of the polyamide composition can be further suppressed. The content of the copper compound is preferably 1.0 part by mass or less, more preferably 0.5 parts by mass or less, still more preferably 0.1 parts by mass or less, and yet still more preferably 0.03 parts by mass or less, based on copper (that is, in terms of copper element) with respect to 100 parts by mass of the polyamide resin. When the content is 1.0 part by mass or less, the occurrence of corrosion in a die, an extruder, or a molding machine (for example, corrosion in a screw or a cylinder or the like), which can be caused by the copper compound, can be suppressed.

In the polyamide composition of the present embodiment, the content of the copper compound is preferably 0.001% by mass or more, more preferably 0.003% by mass or more, still more preferably 0.005% by mass or more, yet still more preferably 0.007% by mass or more, and further preferably 0.010% by mass or more. The content of the copper compound may be 0.015% by mass or more or 0.020% by mass or more. Meanwhile, the content of the copper compound is preferably 1.0% by mass or less, more preferably 0.5% by mass or less, still more preferably 0.3% by mass or less, yet still more preferably 0.1% by mass or less, further preferably 0.07% by mass or less, and further more preferably 0.05% by mass or less.

As the antioxidant, a phenolic antioxidant and a copper compound are preferably used in combination, and a hindered phenolic antioxidant and a copper compound are more preferably used in combination. By using these in combination, it is possible to effectively reduce the degree of the deterioration of the polyamide on the surface or in the vicinity of the surface of the molded article when the molded article is exposed to a high-temperature environment for a long period of time, and therefore it is possible to further avoid an excessive decrease in adhesion between the molded article and an object (for example, a gap filler) on the molded article, which may occur when the molded article is exposed to a high-temperature environment for a long period of time. This will be explained. When the molded article is exposed to a high-temperature environment for a long period of time, radicals may be generated at a speed exceeding the radical scavenging rate of the phenolic antioxidant. That is, a radical generation amount per unit time may exceed a radical scavenging amount per unit time of the phenolic antioxidant. For example, when the molded article is exposed to 150°C for a long period of time, the radical generation amount per unit time may exceed the radical scavenging amount per unit time of the hindered phenolic antioxidant. By using the copper compound together with the phenol antioxidant, the polyamide can be stabilized and therefore the oxidative degradation of the polyamide due to radicals not captured by the phenol antioxidant can be reduced. Therefore, it is possible to effectively reduce the degree of the deterioration of the polyamide on the surface or in the vicinity of the surface of the molded article when the molded article is exposed to a high-temperature environment for a long period of time, and therefore it is possible to further reduce the degree of the deterioration of the smoothness of the molded article. As a result, it is possible to further avoid an excessive decrease in adhesion between the molded article and an object (for example, a gap filler) on the molded article, which may occur when the molded article is exposed to a high-temperature environment for a long period of time. Together with the phenolic antioxidant and the copper compound, other antioxidants (for example, a hindered amine stabilizer (HALS), an organic phosphorus stabilizer, an amine antioxidant, a sulfur antioxidant, fine elemental iron, a fine dispersed metal powder, and a metal cyanide salt) may be further used.

The total content of the phenolic antioxidant and the copper compound in 100% by mass of the antioxidant contained in the polyamide composition of the present embodiment is preferably 80% by mass or more, more preferably 90% by mass or more, and still more preferably 93% by mass or more. The total content of the phenolic antioxidant and the copper compound may be 95% by mass or more, 98% by mass or more, or 100% by mass.

An alkali metal halide (that is, an alkali metal halide compound) also has an action of preventing the oxidative degradation of the polyamide. Examples of the alkali metal halide include potassium halides such as potassium iodide and potassium bromide. When the polyamide composition of the present embodiment contains the copper compound and the alkali metal halide, the precipitation of copper can also be prevented by the alkali metal halide.

In the polyamide composition of the present embodiment, the content of the alkali metal halide is preferably 0.01% by mass or more, more preferably 0.05% by mass or more, and still more preferably 0.08% by mass or more. Meanwhile, the content of the alkali metal halide is preferably 1.0% by mass or less, more preferably 0.5% by mass or less, still more preferably 0.4% by mass or less, yet still more preferably 0.3% by mass or less, and further preferably 0.2% by mass or less.

In the polyamide composition of the present embodiment, the content of the antioxidant is preferably 0.05% by mass or more, more preferably 0.1% by mass or more, and still more preferably 0.15% by mass or more. Meanwhile, the content of the antioxidant is preferably 1.0% by mass or less, and more preferably 0.5% by mass or less. The content of the antioxidant may be 0.4% by mass or less, 0.3% by mass or less, or 0.25% by mass or less.

In the polyamide composition of the present embodiment, the content of the stabilizer is preferably 0.005% by mass or more, more preferably 0.01% by mass or more, and still more preferably 0.015% by mass or more. Meanwhile, the content of the stabilizer is preferably 0.1% by mass or less, more preferably 0.07% by mass or less, still more preferably 0.05% by mass or less, and yet still more preferably 0.04% by mass or less.

In the polyamide composition of the present embodiment, the total content of the antioxidant and the stabilizer is preferably 0.05% by mass or more, more preferably 0.1% by mass or more, and still more preferably 0.15% by mass or more. Meanwhile, the total content of the antioxidant and the stabilizer is preferably 1.0% by mass or less, and more preferably 0.5% by mass or less. The total content may be 0.4% by mass or less, 0.3% by mass or less, or 0.25% by mass or less.

### <1.5. Mold release agent>

The polyamide composition of the present embodiment preferably contains a mold release agent. When the polyamide composition contains the mold release agent, it is easy to take out the molded article from a die in a case where the polyamide composition is molded (for example, injection-molded) in the die. Therefore, even when the molded article has a complicated shape, the molded article can be easily taken out from the die.

Examples of the mold release agent include esters and metal salts of long chain fatty acids. Examples of the mold release agent include amide-based compounds such as ethylenebis(terephthalamide) and methylenebis(stearylamide). Examples of the mold release agent include waxes such as aliphatic hydrocarbon-based and polyethylene-based waxes, and polysiloxane-based silicone oils. Among these, fatty acid metal salt-based mold release agents and fatty acid ester-based mold release agents are preferred. In other words, fatty acid metal salts and fatty acid ester-based compounds (that is, fatty acid esters) are preferred. These may be used singly or two or more kinds thereof may be used.

Examples of fatty acid metal salts include metal salts of fatty acids having 12 to 40 carbon atoms, such as stearic acid, palmitic acid, behenic acid, erucic acid, oleic acid, lauric acid, and montanic acid. Among these, metal salts of aliphatic carboxylic acids having 22 to 30 carbon atoms are preferred. In particular, the alkali metal or alkaline earth metal salts of behenic acid, lignoceric acid, montanic acid, and the like are more preferable from the viewpoint of mold releasability. Examples of the alkali metals or alkaline earth metals include lithium, sodium, magnesium, and calcium.

Examples of the fatty acid ester-based compounds include higher fatty acid ester-based compounds. Examples of the higher fatty acid ester-based compounds include stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, pentaerythritol tetrastearate, and a mixture mainly composed of myricyl palmitate.

In the polyamide composition of the present embodiment, the content of the mold release agent is preferably 0.01% by mass or more, more preferably 0.1% by mass or more. When the content of the mold release agent is 0.01% by mass or more, it is possible to prevent the polyamide composition from sticking to the mold when the polyamide composition is injected into a mold, and to prevent wrinkles that may be generated on the surface of the molded article during mold release. Meanwhile, the content of the mold release agent is preferably 1.0% by mass or less, more preferably 0.5% by mass or less.

### <1.6. Other additives and the like>

The polyamide composition of the present embodiment may contain, for example, carbon black, copper oxide, a light stabilizer, a crystal nucleating agent, an anti-static agent, a pigment, a dye, and an electromagnetic wave inhibitor and the like. Of course, the polyamide composition of the present embodiment may contain a resin other than polyamide.

In the polyamide composition of the present embodiment, the total content of the fibrous inorganic reinforcing material and the thermally conductive inorganic filler is preferably 50% by mass or more, more preferably 55% by mass or more, still more preferably 58% by mass or more. Meanwhile, the total content of the fibrous inorganic reinforcing material and the thermally conductive inorganic filler is preferably 70% by mass or less, more preferably 65% by mass or less, still more preferably 62% by mass or less.

### <1.7. Physical properties>

It is more preferable as the bending strength of the polyamide composition of the present embodiment is higher. The bending strength is preferably 120 MPa or more, more preferably 150 MPa or more, still more preferably 160 MPa or more, still more preferably 170 MPa or more. When the molded article is used as a peripheral part of an electrical and electronic part (for example, a battery or a motor) in a case where the bending strength is 120 MPa or more, the molded article can have suitable mechanical properties. The bending strength may be 230 MPa or less, 220 MPa or less, or 215 MPa or less. The bending strength of the polyamide composition is a value measured after a test piece is prepared using the polyamide composition. Specifically, the bending strength of the polyamide composition is a value measured by the method described in Examples.

It is more preferable as the thermal conductivity of the polyamide composition of the present embodiment is higher. The thermal conductivity is preferably 0.60 W/m·K or more, more preferably 0.65 W/m·K or more, still more preferably 0.70 W/m·K or more. When the thermal conductivity is 0.60 W/m·K or more, the molded article can have a suitable thermal conductivity when the molded article is used as a peripheral part of an electrical and electronic part (for example, a battery or a motor). The thermal conductivity of the polyamide composition may be 1.20 W/m·K or less, 1.10 W/m·K or less, or 1.00 W/m·K or less. The thermal conductivity of the polyamide composition is a value measured after a disk-shaped sample is prepared using the polyamide composition. Specifically, the thermal conductivity of the polyamide composition is a value measured by the method described in Examples.

With respect to the polyamide composition of the present embodiment, the ratio (that is, the peak area ratio) of the area of a peak (that is, a peak A) at 1750 cm⁻¹ to 1700 cm⁻¹ to the area of a peak (that is, a peak B) at 1665 cm⁻¹ to 1630 cm⁻¹ in an infrared absorption spectrum when being left to stand under a temperature environment of 150°C for 1000 hours is preferably 0.10 or less. Here, the "infrared absorption spectrum" is an infrared absorption spectrum at a depth of 50 µm from the surface of a molded article when the molded article having an arithmetic average roughness (Ra) of 0.1 µm is molded using the polyamide composition, and the molded article is then left to stand under a temperature environment of 150°C for 1000 hours. When the peak area ratio is 0.10 or less, it is possible to avoid an excessive decrease in adhesion between the molded article and an object (for example, a gap filler) on the molded article, which may occur when the molded article is exposed to a high-temperature environment for a long period of time. This is because it is possible to further reduce the degree of the deterioration of the polyamide when the molded article is exposed to a high-temperature environment for a long period of time. This will be explained. The peak at 1750 cm⁻¹ to 1700 cm⁻¹ (that is, the peak A) is a peak that increases due to the deterioration of the polyamide. Meanwhile, the peak at 1665 cm⁻¹ to 1630 cm⁻¹ (that is, the peak B) is a peak derived from the carbonyl group of an amide bond. Therefore, in the infrared absorption spectrum when being left to stand under a temperature environment of 150°C for 1000 hours, the smaller the ratio of the area of the peak A to the area of the peak B (that is, peak A area/peak B area), the smaller the degree of the deterioration of the polyamide. According to the polyamide composition of the present embodiment, the ratio, that is, the peak area ratio is 0.10 or less, and therefore the degree of the deterioration of the polyamide on the surface or in the vicinity of the surface of the molded article when the molded article is exposed to a high-temperature environment for a long period of time can be further reduced. Therefore, it is possible to reduce the detachment of the thermally conductive inorganic filler and the fibrous inorganic reinforcing material and the occurrence of cracks, which may occur when the molded article is exposed to a high-temperature environment for a long period of time. That is, the degree of the deterioration of the smoothness of the molded article when the molded article is exposed to a high-temperature environment for a long period of time can be reduced. As a result, it is possible to avoid an excessive decrease in adhesion between the molded article and an object (for example, a gap filler) on the molded article, which may occur when the molded article is exposed to a high-temperature environment for a long period of time.

The peak area ratio is more preferably 0.09 or less, still more preferably 0.08 or less, yet still more preferably 0.06 or less, further preferably 0.05 or less, and further more preferably 0.04 or less. The peak area ratio may be 0.03 or less or 0.02 or less. The peak area ratio is specifically a value measured by the method described in Examples.

With respect to the polyamide composition of the present embodiment, the arithmetic average roughness (Ra) (hereinafter, may be referred to as "roughness after treatment") when being left to stand under a temperature environment of 150°C for 1000 hours is preferably 3.0 µm or less, more preferably 2.5 µm or less, and still more preferably 2.0 µm or less. When the arithmetic average roughness is 2.0 µm or less, it is possible to further avoid an excessive decrease in adhesion between the molded article and an object (for example, a gap filler) on the molded article, which may occur when the molded article is exposed to a high-temperature environment for a long period of time. The arithmetic average roughness (Ra) may be 1.5 µm or less, 1.2 µm or less, or 1.0 µm or less. The roughness of the polyamide composition after treatment is a value measured after a flat molded article having an arithmetic average roughness (Ra) of 0.1 µm is prepared using the polyamide composition, and the flat molded article is then left to stand under a temperature environment of 150°C for 1000 hours. Specifically, the roughness after treatment is a value measured by the method described in Examples.

With respect to the polyamide composition of the present embodiment, a difference in arithmetic average roughness (Ra) between before and after being left to stand under a temperature environment of 150°C for 1000 hours is preferably 1.5 µm or less as an absolute value. That is, the difference between the arithmetic average roughness (Ra) after being left to stand under a temperature environment of 150°C for 1000 hours (that is, the roughness after treatment) and the arithmetic average roughness (Ra) before being left to stand under a temperature environment of 150°C for 1000 hours (hereinafter, may be referred to as "roughness before treatment") is preferably 1.5 µm or less. When the difference is 1.5 µm or less, it is possible to further avoid an excessive decrease in adhesion between the molded article and an object (for example, a gap filler) on the molded article, which may occur when the molded article is exposed to a high-temperature environment for a long period of time. The difference is more preferably 1.3 µm or less, still more preferably 1.0 µm or less, yet still more preferably 0.8 µm or less, and further preferably 0.6 µm or less.

### <1.8. Production method and use>

The polyamide composition of the present embodiment can be produced by kneading at least a polyamide, a fibrous inorganic reinforcing material, a thermally conductive inorganic filler, and an antioxidant and/or a stabilizer as necessary in a kneading apparatus. For the kneading, an extruder (for example, a single-screw extruder or a twin-screw extruder), or a pressure kneader or the like can be used. Among these, an extruder is preferable, and a twin-screw extruder is more preferable. The kneading temperature can be 220°C to 300°C. The kneading time can be, for example, about 2 to 15 minutes.

For example, the polyamide composition of the present embodiment can be produced by a method in which at least a polyamide, a fibrous inorganic reinforcing material, a thermally conductive inorganic filler, and an antioxidant and/or a stabilizer as necessary are melt-kneaded using a twin-screw extruder, and then extruded into strands, and the strands are cooled as necessary, and cut as necessary.

When at least a copper compound is used as the stabilizer, a copper compound-containing masterbatch may be blended with a polyamide, a fibrous inorganic reinforcing material, and a thermally conductive inorganic filler and the like, followed by kneading. Meanwhile, the copper compound may be added at any stage of the production of the polyamide. For example, the copper compound may be added to a raw material salt aqueous solution of a polyamide, or may be injected and added into a molten polyamide during melt polymerization.

The shape of the polyamide composition of the present embodiment can be appropriately set. The polyamide composition of the present embodiment may be, for example, in the form of pellets, strands, or powder, or may be molded into an arbitrary shape. Among these, the form of pellets is preferred.

The polyamide composition of the present embodiment can be used as a raw material for various molded articles. Among these, the polyamide composition of the present embodiment can be suitably used as a raw material for electrical and electronic parts, motor vehicle parts (for example, electric vehicle parts), and industrial parts and the like that are required to exhibit a high thermal conductivity. Examples of such parts include lamp sockets, electrical parts, heat sinks, parts for semiconductor packages, parts for cooling fans, connectors, switches, case housings, battery cases, parts used around battery cases, and parts used inside battery cases (for example, base plates of battery modules). Here, the battery case may be a housing of a battery pack. In particular, the polyamide composition of the present embodiment can be suitably used for producing peripheral parts (for example, battery cases, parts used around battery cases, parts used inside battery cases) of electrical and electronic parts (for example, batteries) that cause high Joule heating. Among these, the polyamide composition can be more suitably used for producing the battery case. Here, the use of the polyamide composition for producing the battery case means the use of the polyamide composition for producing at least one of a plurality of members when the battery case includes the members.

The polyamide composition of the present embodiment can be suitably used as a raw material for a molded article to which a gap filler is to be provided. That is, the polyamide composition of the present embodiment can be suitably used for producing a molded article to which a gap filler is to be provided. The gap filler may be applied to the molded article to provide the molded article with the gap filler. Meanwhile, the molded article may be provided with the gap filler as a result of a procedure in which the gap filler is applied to something (for example, a part constituting a battery or a motor), and the molded article is then adhered thereto by the gap filler. The gap filler can contain a thermally conductive inorganic filler. The description of the thermally conductive inorganic filler of the gap filler is omitted because the description overlaps with the above description (that is, the description of the thermally conductive inorganic filler of the polyamide composition of the present embodiment). Therefore, the description of the thermally conductive inorganic filler of the polyamide composition of the present embodiment can also be treated as the description of the thermally conductive inorganic filler of the gap filler. The gap filler can further contain a polymer. Examples of the polymer include silicone and polyurethane. These may be used singly or two or more kinds thereof may be used. The polymer may be an oligomer. The thermally conductive inorganic filler may further contain a curing agent. The thermally conductive inorganic filler may contain other additives. The thermally conductive inorganic filler is preferably curable. The object which is to be provided on the molded article may be an object other than the gap filler.

### <2. Molded article>

The molded article of the present embodiment can be obtained by molding the polyamide composition of the present embodiment described above. In other words, the molded article of the present embodiment can be obtained from the polyamide composition of the present embodiment described above. Examples of the molding method include injection molding, extrusion molding, and blow molding. Among these, injection molding is preferable in that a complicated shape can be achieved.

### EXAMPLES

Hereinafter, the present invention will be more specifically described by reference to Examples and Comparative Examples. Hereinafter, "parts" means "parts by mass" and "%" means "% by mass" unless otherwise stated.

### <1. Raw materials>

The following raw materials were used.

### <1.1. Polyamide>

A1····"M2000" manufactured by MEIDA (polyamide 6, relative viscosity 2.0, melting point 225°C)
A2····"ZISAMIDE TP4208" manufactured by ZIG SHENG INDUSTRIAL CO., LTD. (polyamide 6, relative viscosity 2.5, melting point 225°C)
A3····"ZISAMIDE TP6603" manufactured by ZIG SHENG INDUSTRIAL CO., LTD. (polyamide 6, relative viscosity 3.6, melting point 225°C)

### <1.2. Fibrous inorganic reinforcing material>

B1····"ECS301HP-3-H" (glass fiber) manufactured by CHONGQING POLYCOMP INTERNATIONAL CORPORATION (CPIC)
B2 ····"CFUW-MC" (carbon fiber) manufactured by Nippon Polymer Sangyo Co., Ltd.

### <1.3. Thermally conductive inorganic filler>

C1····"RF-50-AC" manufactured by Ube Material Industries, Ltd. (surface-treated magnesium oxide sintered body having particle diameter of 50 µm. This sintered body contains magnesium oxide, calcium oxide and silicon oxide.)
C2····"HF-10" manufactured by Tokuyama Corporation (aluminum nitride having particle diameter of 10 µm, no surface treatment)
C3 ····Surface-treated magnesium oxide sintered body having particle diameter of 10 µm (details will be described later.)
C4····Surface-treated magnesium oxide sintered body having particle diameter of 100 µm (details will be described later.)

### Thermally conductive inorganic filler C3

Thermally conductive inorganic filler obtained by subjecting magnesium oxide sintered body having particle diameter of 10 µm (this sintered body contains magnesium oxide, calcium oxide and silicon oxide), which is manufactured according to JP-B-5993824, to the same surface treatment as that of thermally conductive inorganic filler C1 (that is, "RF-50-AC").

### Thermally conductive inorganic filler C4

Thermally conductive inorganic filler obtained by subjecting magnesium oxide sintered body having particle diameter of 100 µm (this sintered body contains magnesium oxide, calcium oxide and silicon oxide), which is manufactured according to JP-B-5993824, to the same surface treatment as that of thermally conductive inorganic filler C1 (that is, "RF-50-AC").

### <1.4 Antioxidant or stabilizer>

D1····"SONGNOX 2450" (hindered phenolic antioxidant) manufactured by SONGWON INDUSTRIAL CO., LTD.
D2····Cupric bromide manufactured by Nihon Kagaku Sangyo Co., Ltd.
D3····Potassium iodide manufactured by GODO SHIGEN Co., Ltd.

### <1.5. Mold release agent>

E1····"Licolub WE-40" (aliphatic ester) manufactured by Clariant Japan Co., Ltd.
E2 ····"N.P.1500-S" (magnesium stearate) manufactured by TANNAN KAGAKU KOGYO CO., LTD.

### <1.6. Coupling agent>

F····"KBE-903" (3-aminopropyltriethoxysilane) manufactured by Shin-Etsu Chemical Co., Ltd.

### <2. Production of pellets>

The respective raw materials were weighed according to the blending proportions presented in Tables 1 and 2, mixed using a tumbler, and then fed into a twin-screw extruder to obtain pellets. The set temperature of the twin-screw extruder was 250°C to 300°C, and the kneading time was 5 to 10 minutes.

### <3. Evaluation methods>

### <3.1 Relative viscosity of polyamide (98% sulfuric acid solution method)>

The relative viscosity was measured at 25°C and a polyamide of 1 g/dL using 98% sulfuric acid and an Ubbelohde viscometer in conformity with JIS K6920-2:2009.

### <3.2. Melting point of polyamide>

Measurement was performed at a temperature rise rate of 20°C/min using a differential scanning calorimeter (EXSTAR 6000 manufactured by Seiko Instruments Inc.) and the endothermic peak temperature was determined.

### <3.3. Arithmetic average roughness (Ra)>

The pellets were molded into a flat molded article having a thickness of 2 mm, a length of 100 mm, and a width of 100 mm using an injection molding machine at a cylinder temperature of 260°C and a die temperature of 90°C. The arithmetic average height of the contour curve element of the surface of the flat molded article, specifically, the arithmetic average roughness (Ra) was measured by a method in accordance with JIS B 0601:2013. Even after the flat molded article was treated at 150°C for 1000 hours, the arithmetic average roughness (Ra) was measured by the same method, that is, the method in accordance with JIS B 0601:2013.

### <3.4. Peak area ratio of spectrum>

The pellets were molded into a flat molded article having an arithmetic average roughness (Ra) of 0.1 µm, a thickness of 2 mm, a length of 100 mm, and a width of 100 mm using an injection molding machine at a cylinder temperature of 260°C and a die temperature of 90°C. The flat molded article was treated at 150°C for 1000 hours, and a sample was cut out from the flat molded article. The sample was embedded in an epoxy resin, and the sample embedded in the epoxy resin was then cut in a plane perpendicular to the surface of the sample. A cross section provided by this cutting was smoothly polished by a rotary polishing machine on which a polishing paper was stretched.

Micro-infrared measurement was performed on the polished cross-sectional sample according to a reflection method (apparatus used: Agilent Technologies, Inc., Cary670FTIR/Cary620FTIR microscope). Measurement was performed using a 64×64MCTFPA detector with a resolution of 8 cm⁻¹ and a number of integrations of 256 times. In the polished cross-sectional sample, the y-axis of the measurement surface and the cross-sectional end were made parallel to each other, and the polished cross-sectional sample was disposed so that the cross-sectional end was included in a range of x = 1 to 10 of a measurement range (specifically, 350 µm square, measurement points were 4096 points with x = 0 to 63 and y = 0 to 63).

Spectrum data obtained by the micro-infrared measurement was subjected to Kramers-Kronig conversion using an attached analysis software. The spectrum of each measurement point was confirmed from the left end of the measurement range, and the position of a value of x obtained by adding 9 to a value of x (end portion constituting the surface of the sample) at which the number of points at which a main peak derived from the embedded resin (this time, a main peak appearing at about 1510 cm⁻¹ since an epoxy resin, specifically bisphenol A epoxy, was used as the embedded resin) was detected was smaller than half for the first time was defined as a measurement point at a depth of 50 µm from the surface of the sample. This is because the length between the measurement points is about 5.5 µm.

From 64 measurement points at a depth of 50 µm from the surface of the sample, 8 measurement points were selected in the descending order of the area of the peak at 1665 cm⁻¹ to 1630 cm⁻¹, and the average spectrum of the 8 points was defined as a spectrum at a depth of 50 µm from the surface of the sample. Since the ratio of the inorganic filler was high in the surface of the sample and the spectrum was not obtained with sufficient intensity, a spectrum at a depth of 50 µm from the surface of the sample was obtained by the above-described procedure.

In the spectrum at the depth of 50 µm from the surface of the sample, the area of the peak at 1750 cm⁻¹ to 1700 cm⁻¹ and the area of the peak at 1665 cm⁻¹ to 1630 cm⁻¹ were determined. The peak at 1750 cm⁻¹ to 1700 cm⁻¹ is a peak of a carbonyl group that increases due to the deterioration of the polyamide. Meanwhile, the peak at 1665 cm⁻¹ to 1630 cm⁻¹ is a peak derived from the carbonyl group of an amide bond. Note that a line connecting an average value of absorbances at 1800 cm⁻¹ to 1780 cm⁻¹ and an average value of absorbances at 1600 cm⁻¹ to 1580 cm⁻¹ was regarded as a baseline, and the areas of the peaks were then determined.

In addition, the ratio of the area of the peak at 1750 cm⁻¹ to 1700 cm⁻¹ to the area of the peak at 1665 cm⁻¹ to 1630 cm⁻¹, that is, the area of the peak at 1750 cm⁻¹ to 1700 cm⁻¹/the area of the peak at 1665 cm⁻¹ to 1630 cm⁻¹ (that is, the peak area ratio) was determined.

### <3.5. Bending strength>

The pellets were molded into a test piece having a shape specified in A1 of JIS K 7139: 2009 using an injection molding machine at a cylinder temperature of 260°C and a mold temperature of 80°C. A bending test was performed on this test piece in conformity with ISO178: 2010 to measure the bending strength (that is, the maximum bending stress that the test piece could withstand during the bending test). The bending test was performed at a support distance of 64 mm and a test speed of 2 mm/min by the method A in which the strain rate was not changed during the test.

### <3.6. Thermal conductivity>

The pellets were molded into a flat molded article 2 mm in thickness, 100 mm in length, and 100 mm in width using an injection molding machine at a cylinder temperature of 260°C and a mold temperature of 90°C. The center of the flat molded article was cut into a disk shape having a width of about 10 mm. The thermal diffusion coefficient, density, and specific heat of the disk-shaped sample were measured. The thermal diffusion coefficient was measured by the laser flash method in conformity with ASTM E1461. The density was measured by the water substitution method in conformity with ISO 1183: 1987. The specific heat was measured by a method conforming to JIS K 7123: 1987. Then, the thermal conductivity was calculated by the following formula. $λ = ρ ⋅ Cp ⋅ α$
*λ* : Thermal conductivity (W/m·K)
*ρ* : Density (kg/m³)
*Cp :* Specific heat (J/kg·K)
*α* : Thermal diffusion coefficient (m²/s)

The thermal conductivity of the flat molded article after being treated at 150°C for 1000 hours was also determined by the above procedure.

### <3.7. Adhesion to gap filler>

Two plate-shaped molded articles having an arithmetic average roughness (Ra) of 0.1 µm, a thickness of 3 mm, a length of 55 mm, and a width of 15 mm were molded using the pellets. A gap filler was applied to the tip in the length direction of one of both surfaces of the first molded article so that the gap filler was 15 mm square and 1 mm thick. The gap filler was sandwiched and bonded at the tip in the length direction of one of both surfaces of the second molded article. As a result, an object including the first molded article, the second molded article, and the gap filler for bonding the molded articles was obtained. From this object, a test piece having a length of 95 mm and a width of 15 mm was cut out. The test piece was left to stand under an environment of 130°C for 1000 hours (that is, after degradation promotion treatment was performed), and a tensile test was then performed. In the tensile test, the first molded article of the test piece was gripped with a first gripper, the second molded article of the test piece was gripped with a second gripper, and the test piece was then pulled in the length direction of the test piece. In this tensile test, a case where a shear bond strength (that is, a stress obtained by dividing a load by a joint area) when peeling occurred between the first molded article or the second molded article and the gap filler was less than 0.1 MPa was determined as poor. Meanwhile, a case where the shear bond strength when peeling occurred was 0.1 MPa or more was determined as good.

### <4. Results>

Tables including the results are presented below.

**[Table 1]**

| | | Example 1 | Example 2 | Example 3 | Example 4 | Example 5 | Example 6 | Example 7 | Example 8 | Example 10 | Example 11 | Example 12 | Example 13 | Example 14 | Example 15 |
|---|---|---|---|---|---|---|---|---|---|---|---|---|---|---|---|
| Composition (Parts by Mass) | Polyamide A1 | 40 | | | | | | | | | | | | | |
| | Polyamide A2 | | 40 | | 40 | 40 | 40 | 40 | 40 | 40 | 40 | 40 | 40 | 40 | 40 |
| | Polyamide A3 | | | 40 | | | | | | | | | | | |
| | Fibrous Inorganic Reinforcing Material B1 | 20 | 20 | 20 | | 20 | 20 | 20 | 10 | 5 | | 20 | 20 | 20 | 20 |
| | Fibrous Inorganic Reinforcing Material B2 | | | | 20 | | | | 10 | | 30 | | | | |
| | Thermally Conductive Inorganic Filler C1 | 40 | 40 | 40 | 40 | | | | 40 | 55 | 30 | 40 | 40 | 40 | 40 |
| | Thermally Conductive Inorganic Filler C2 | | | | | 40 | | | | | | | | | |
| | Thermally Conductive Inorganic Filler C3 | | | | | | 40 | | | | | | | | |
| | Thermally Conductive Inorganic Filler C4 | | | | | | | 40 | | | | | | | |
| | Antioxidant D1 | 0.2 | 0.2 | 0.2 | 0.2 | 0.2 | 0.2 | 0.2 | 0.2 | 0.2 | 0.2 | 0.5 | 0.2 | 0.1 | 0.2 |
| | Stabilizer D2 | 0.02 | 0.02 | 0.02 | 0.02 | 0.02 | 0.02 | 0.02 | 0.02 | 0.02 | 0.02 | 0.03 | 0.02 | 0.01 | 0.02 |
| | Stabilizer D3 | | | | | | | | | | | | | | 0.1 |
| | Mold Release Agent E1 | 0.3 | 0.3 | 0.3 | 0.3 | 0.3 | 0.3 | 0.3 | 0.3 | 0.3 | 0.3 | 0.3 | | 0.3 | 0.3 |
| | Mold Release Agent E2 | | | | | | | | | | | | 0.3 | | |
| | Coupling Agent F | | | | | 0.4 | | | | | | | | | |
| Physical Properties | Arithmetic Average Roughness | 0.1 | 0.1 | 0.1 | 0.1 | 0.1 | 0.1 | 0.1 | 0.1 | 0.1 | 0.1 | 0.1 | 0.1 | 0.1 | 0.1 |
| | Before Thermal Degradation (Ra) (µm) | | | | | | | | | | | | | | |
| | Arithmetic Average Roughness | 0.5 | 0.4 | 0.5 | 0.7 | 0.3 | 0.6 | 0.5 | 0.4 | 0.2 | 0.6 | 0.5 | 0.4 | 0.9 | 0.3 |
| | After Thermal Degradation (Ra) (µm) | | | | | | | | | | | | | | |
| | Difference Between Ra After Thermal | 0.4 | 0.3 | 0.4 | 0.6 | 0.2 | 0.5 | 0.4 | 0.3 | 0.1 | 0.5 | 0.4 | 0.3 | 0.8 | 0.2 |
| | Degradation and Ra Before Thermal | | | | | | | | | | | | | | |
| | Degradation (µm) | | | | | | | | | | | | | | |
| | Peak Area Ratio | 0.03 | 0.03 | 0.02 | 0.04 | 0.03 | 0.06 | 0.05 | 0.06 | 0.04 | 0.04 | 0.01 | 0.03 | 0.08 | 0.02 |
| | After Thermal Degradation | | | | | | | | | | | | | | |
| | Bending Strength (MPa) | 183 | 180 | 195 | 270 | 187 | 209 | 188 | 221 | 129 | 364 | 183 | 182 | 182 | 177 |
| | Thermal Conductivity (W/m·K) | 0.76 | 0.72 | 0.77 | 0.97 | 0.90 | 0.79 | 0.71 | 0.81 | 1.05 | 0.71 | 0.76 | 0.73 | 0.71 | 0.73 |
| | Thermal Conductivity | 0.78 | 0.75 | 0.78 | 0.99 | 0.93 | 0.80 | 0.72 | 0.84 | 1.08 | 0.71 | 0.77 | 0.75 | 0.74 | 0.75 |
| | After Thermal Aging (W/m·K) | | | | | | | | | | | | | | |
| | Adhesion to Gap Filler | Good | Good | Good | Good | Good | Good | Good | Good | Good | Good | Good | Good | Good | Good |

**[Table 2]**

| | | Comparative Example 1 | Comparative Example 2 | Comparative Example 3 | Comparative Example 4 | Comparative Example 5 | Comparative Example 6 |
|---|---|---|---|---|---|---|---|
| Composition (Parts by Mass) | Polyamide A1 | | | | | | |
| | Polyamide A2 | 40 | 40 | 40 | 40 | 40 | 40 |
| | Polyamide A3 | | | | | | |
| | Fibrous Inorganic Reinforcing Material B1 | 20 | 20 | 20 | 60 | | 20 |
| | Fibrous Inorganic Reinforcing Material B2 | | | | | | |
| | Thermally Conductive Inorganic Filler C1 | 40 | 40 | 40 | | | 40 |
| | Thermally Conductive Inorganic Filler C2 | | | | | 60 | |
| | Thermally Conductive Inorganic Filler C3 | | | | | | |
| | Thermally Conductive Inorganic Filler C4 | | | | | | |
| | Antioxidant D1 | | 0.2 | | 0.2 | 0.2 | |
| | Stabilizer D2 | | | 0.01 | 0.02 | 0.02 | 0.02 |
| | Mold Release Agent E1 | 0.3 | 0.3 | 0.3 | 0.3 | 0.3 | 0.3 |
| | Mold Release Agent E2 | | | | | | |
| | Coupling Agent F | | | | | | |
| Physical Properties | Arithmetic Average Roughness | 0.1 | 0.1 | 0.1 | 0.1 | 0.1 | 0.1 |
| | Before Thermal Degradation (Ra) (µm) | | | | | | |
| | Arithmetic Average Roughness | 4.2 | 3.4 | 2.3 | 0.7 | 0.5 | 2.1 |
| | After Thermal Degradation (Ra) (µm) | | | | | | |
| | Difference Between Ra After Thermal | 4.1 | 3.3 | 2.2 | 0.6 | 0.4 | 2.0 |
| | Degradation and Ra Before Thermal | | | | | | |
| | Degradation (µm) | | | | | | |
| | Peak Area Ratio | 0.17 | 0.14 | 0.10 | 0.04 | 0.07 | 0.08 |
| | After Thermal Degradation | | | | | | |
| | Bending Strength (MPa) | 184 | 182 | 192 | 363 | 101 | 184 |
| | Thermal Conductivity (W/m·K) | 0.71 | 0.75 | 0.74 | 0.12 | 1.56 | 0.71 |
| | Thermal Conductivity | 0.70 | 0.72 | 0.74 | 0.14 | 1.58 | 0.72 |
| | After Thermal Aging (W/m·K) | | | | | | |
| | Adhesion to Gap Filler | Poor | Poor | Poor | Good | Good | Poor |

In these Tables, physical properties described as "after thermal degradation" mean physical properties after being treated at 150°C for 1000 hours.

As the peak area ratio was smaller, and the difference in arithmetic average roughness (Ra) between before and after treatment at 150°C for 1000 hours was smaller, the adhesion to the gap filler was more excellent (see Examples 1 to 15 and Comparative Examples 1 to 6).

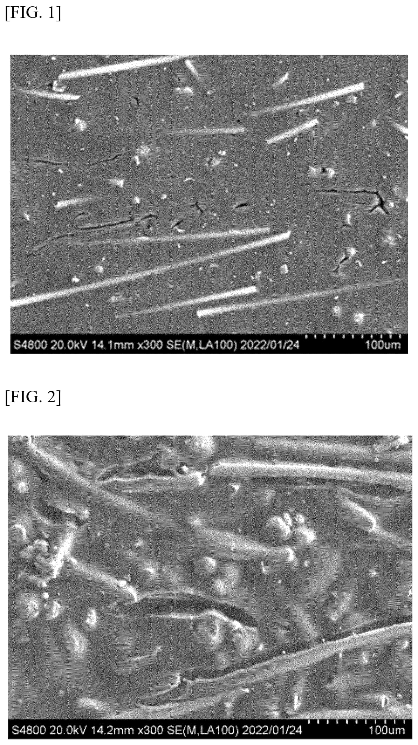

The flat molded article of Example 1 having a peak area ratio of 0.03 and the flat molded article of Comparative Example 2 having a peak area ratio of 0.14 were treated at 150°C for 1000 hours, and the surfaces were then observed. As a result, the surface of the flat molded article of Example 1 was smoother than the surface of the flat molded article of Comparative Example 2 (see Figs. 1 and 2). On the surface of the flat molded article of Comparative Example 2, there were many exposures of the thermally conductive inorganic filler and the fibrous inorganic reinforcing material, and there were also many cracks in a portion where the resin (that is, the polyamide) existed.

By using a hindered phenolic antioxidant and cupric bromide in combination, the peak area ratio could be synergistically lowered. In this regard, by 0.2 parts by mass of the hindered phenolic antioxidant, the peak area ratio was lowered by 0.03 (see Comparative Example 1 and Comparative Example 2). By 0.02 parts by mass of cupric bromide, the peak area ratio was lowered by 0.09 (see Comparative Example 1 and Comparative Example 6). Meanwhile, by the combined use of 0.2 parts by mass of the hindered phenolic antioxidant and 0.02 parts by mass of cupric bromide, the peak area ratio was lowered by 0.14 (see Comparative Example 1 and Example 2).

By the combined use of the hindered phenolic antioxidant and cupric bromide, the degree of the deterioration of the arithmetic average roughness by the treatment at 150°C for 1000 hours could be synergistically reduced. In this regard, by 0.2 parts by mass of the hindered phenolic antioxidant, the arithmetic average roughness after the treatment at 150°C for 1000 hours was reduced by 0.8 µm (see Comparative Example 1 and Comparative Example 2). By 0.02 parts by mass of cupric bromide, the arithmetic average roughness after the treatment at 150°C for 1000 hours was reduced by 2.1 µm (see Comparative Example 1 and Comparative Example 6). Meanwhile, by the combined use of 0.2 parts by mass of the hindered phenolic antioxidant and 0.02 parts by mass of cupric bromide, the arithmetic average roughness after the treatment at 150°C for 1000 hours was reduced by 3.8 µm (see Comparative Example 1 and Example 2).

When the thermally conductive inorganic filler was not used, the thermal conductivity of the molded article was excessively low (see Comparative Example 4). When the fibrous inorganic reinforcing material was not used, the bending strength of the molded article was excessively low (see Comparative Example 5).

### INDUSTRIAL APPLICABILITY

The present invention can provide a polyamide composition and a molded article, and therefore is industrially applicable.

## Claims

1. A polyamide composition comprising:
a polyamide;
a fibrous inorganic reinforcing material; and
a thermally conductive inorganic filler,
wherein
a ratio of an area of a peak at 1750 cm⁻¹ to 1700 cm⁻¹ to an area of a peak at 1665 cm⁻¹ to 1630 cm⁻¹ in an infrared absorption spectrum when being left to stand under a temperature environment of 150°C for 1000 hours is 0.10 or less, and
a difference in arithmetic average roughness (Ra) between before and after being left to stand under a temperature environment of 150°C for 1000 hours is 1.5 µm or less as an absolute value.

2. The polyamide composition according to claim 1, wherein
the polyamide composition has a bending strength of 120 MPa or more and a thermal conductivity of 0.60 W/m·K or more.

3. The polyamide composition according to claim 1, wherein the difference is 1.0 µm or less as the absolute value.

4. The polyamide composition according to claim 1, further comprising an antioxidant and a stabilizer.

5. The polyamide composition according to claim 1, wherein the polyamide contains a crystalline polyamide.

6. The polyamide composition according to claim 1, wherein the polyamide has a relative viscosity of 2.0 or more and 3.6 or less.

7. The polyamide composition according to claim 1, wherein a content of the thermally conductive inorganic filler is 35% by mass or more.

8. The polyamide composition according to claim 1, wherein the thermally conductive inorganic filler is surface-treated.

9. The polyamide composition according to claim 1, wherein the polyamide composition is used as a raw material for a molded article to which a gap filler is to be provided.

10. The polyamide composition according to claim 1, further comprising a phenolic antioxidant and a copper compound.

11. The polyamide composition according to claim 10, wherein the phenolic antioxidant has a hindered structure, and the copper compound is at least one selected from the group consisting of copper acetate, copper iodide, and copper bromide.

12. The polyamide composition according to claim 1, further comprising a mold release agent.

13. A molded article obtained by molding the polyamide composition according to any one of claims 1 to 12.
